# EUROPÄISCHE PATENTANMELDUNG

(11) **EP 4 183 564 A2**
(43) Veröffentlichungstag der Anmeldung: **24.05.2023**
(21) Anmeldenummer: 22203797.0
(22) Anmeldetag: 26.10.2022
(51) Int. Cl.: B29D 30/08, B29D 30/30

(54) **VERFAHREN UND VORRICHTUNG ZUR HERSTELLUNG EINES FAHRZEUGREIFENS SOWIE FAHRZEUGREIFEN**

(30) Priorität: 18.11.2021 DE 102021213015
(71) Anmelder: Continental Reifen Deutschland GmbH, 30165 Hannover (DE)
(72) Erfinder: Thomfohrde, Claudia, 30165 Hannover (DE); Kneussel, Ewald, 30165 Hannover (DE); Kastens, Sven, 30165 Hannover (DE); Linne, Stefan, 30165 Hannover (DE); Feiler, Nikolaj, 30165 Hannover (DE)
(74) Vertreter: Continental Corporation

(57) **Zusammenfassung**

Die Erfindung betrifft ein Verfahren zur Herstellung eines Fahrzeugreifens, umfassend die Herstellung einer Karkasse mit mindestens zwei Seitenwänden, wobei die Karkasse mindestens eine Innenschicht aufweist, und die Herstellung eines Laufstreifenpakets, wobei für die Herstellung der Karkasse mit den mindestens zwei Seitenwänden zumindest ein Abschnitt der Innenschicht und/oder der Seitenwände auf mindestens eine Auflegeeinheit zumindest teilweise spiralförmig in Streifen aufgespult wird, wobei die Innenschicht und/oder die Seitenwände im äußeren Schulterbereich mindestens eine einfach umwickelte Lage aufweisen und/oder für die Herstellung des Laufstreifenpakets mindestens ein Abschnitt oder eine Komponente des Laufstreifens zumindest teilweise spiralförmig in Streifen auf mindestens eine Auflegeeinheit gespult wird und/oder die Karkasse mit den Seitenwänden mindestens mit dem Laufstreifen zu einem Reifenrohling zusammengeführt und ausgeformt wird und der ausgeformte Reifenrohling mit mindestens einer Komponente im Schulterbereich und/oder im Seitenwandbereich zumindest teilweise spiralförmig in Streifen bespult wird. Ferner betrifft die Erfindung eine Vorrichtung sowie einen Fahrzeugreifen.

## Beschreibung

Die Erfindung betrifft ein Verfahren für den Reifenaufbau zur Herstellung eines Fahrzeugreifens gemäß dem Oberbegriff des Patentanspruchs 1. Ferner betrifft die Erfindung eine Vorrichtung zur Herstellung eines Fahrzeugreifens gemäß dem Oberbegriff des Patentanspruchs 6 sowie einen Fahrzeugreifen gemäß dem Oberbegriff des Patentanspruchs 13.

Die Produktion eines Fahrzeugreifens erfolgt heutzutage in verschiedenen Fertigungsstufen, wobei einer dieser Fertigungsstufen den Reifenaufbau umfasst, bei dem die einzelnen Komponenten zu einem Reifenrohling zusammengefügt werden. Die wesentlichen Komponenten umfassen üblicherweise eine Karkasse, zwei Seitenwände und ein Laufstreifenpaket, wobei die Karkasse selbst in der Regel aus einer Innenschicht, einer Einlage und zwei Kernen mit Apex besteht und in einem ersten Schritt geformt wird. Im Folgenden zweiten Expansionsschritt wird die geformte Karkasse auf eine Bombiertrommel gebracht und in ein Paket aus Gürtellagen, Spulbandage und Laufstreifen expandiert. Das Paket aus Gürtellagen, Spulbandage und Laufstreifen wird nachfolgend auch Laufstreifenpaket oder Gürtelpaket genannt.

Der Aufbau eines Reifenrohlings erfolgt im Stand der Technik auf einer oder mehreren Trommeln, wobei die einzelnen Komponenten von Hand oder automatisch aufgelegt und zusammengefügt werden. Beispielsweise wird die Karkasse auf einer Karkasstrommel und das Laufstreifenpaket oder Gürtelpaket auf einer Gürteltrommel aufgebaut. Das Zusammenfügen der einzelnen Komponenten der Karkasse, der Seitenwände sowie des Laufstreifenpakets ist ein hoch komplexer Verfahrensschritt, dessen Ziel es ist, einen Fahrzeugreifen zu produzieren, der die heutigen Qualitätsanforderungen erfüllt.

Derzeitig erfolgt der Aufbau der Karkasse mit den Seitenwänden und des Laufstreifenpakets entweder indem die Lagen oder Schichten einfach auf eine Trommel gewickelt werden. Nachteilig ist, dass derzeitige Verfahren zur Herstellung eines Fahrzeugreifens und die dafür vorgesehenen Reifenaufbaumaschinen nicht dazu ausgebildet sind, flexibel die einzelnen Lagen unterschiedlich und individuell auf eine Trommel aufzuwickeln. Dies ist notwendig, da Fahrzeugreifen im Querschnitt unterschiedlichen Belastungen ausgesetzt sind. Entsprechend nachteilig sind derzeitige Fahrzeugreifens aufgrund ihres Aufbaus und weisen somit Verbesserungspotenzial auf.

Hier setzt die vorliegende Erfindung an. Es ist die Aufgabe der Erfindung ein Verfahren zur Herstellung eines Fahrzeugreifens bereitzustellen, durch das die Qualität des Fahrzeugreifens verbessert wird. Ferner ist die Aufgabe der Erfindung eine Vorrichtung bereitzustellen, durch die die Qualität des Fahrzeugreifens verbessert wird und insbesondere die Effektivität und Flexibilität im Reifenaufbau erhöht wird.

Gelöst wird die Aufgabe durch ein Verfahren zur Herstellung eines Fahrzeugreifens mit den Merkmalen des Patentanspruchs 1, durch eine Vorrichtung zur Herstellung eines Fahrzeugreifens mit den Merkmalen des Patentanspruchs 6 sowie durch einen Fahrzeugreifen mit den Merkmalen des Patentanspruchs 13.

Gelöst wird die Aufgabe durch ein Verfahren zur Herstellung eines Fahrzeugreifens, umfassend die Herstellung einer Karkasse mit mindestens zwei Seitenwänden, wobei die Karkasse mindestens eine Innenschicht aufweist, und die Herstellung eines Laufstreifenpakets, wobei
für die Herstellung der Karkasse mit den mindestens zwei Seitenwänden zumindest ein Abschnitt der Innenschicht und/oder der Seitenwände auf mindestens eine Auflegeeinheit zumindest teilweise spiralförmig in Streifen aufgespult wird, wobei die Innenschicht und/oder die Seitenwände im äußeren Schulterbereich mindestens eine einfach umwickelte Lage aufweisen
   und/oder
für die Herstellung des Laufstreifenpakets mindestens ein Abschnitt oder eine Komponente des Laufstreifens zumindest teilweise spiralförmig in Streifen auf mindestens eine Auflegeeinheit gespult wird
   und/oder
die Karkasse mit den Seitenwänden mindestens mit dem Laufstreifen zu einem Reifenrohling zusammengeführt und ausgeformt wird und der ausgeformte Reifenrohling mit mindestens einer Komponente im Schulterbereich und/oder im Seitenwandbereich zumindest teilweise spiralförmig in Streifen bespult wird.

Vorteilhafterweise verringert sich durch das erfindungsgemäße Verfahren deutlich der Aufwand in der Materialvorbereitung. So muss beispielsweise lediglich ein Standardstreifen für den Aufbau der Innenschicht und/oder der Seitenwand eingesetzt werden, wodurch auch die Komplexität massiv reduziert wird. Infolgedessen bietet dies einen wesentlichen Vorteil für alle Qualitätspunkte bezüglich des Rundlaufs, da in großen Bereichen die Splice für die Innenschicht und die Seitenwand entfallen. Auch für den Aufbau des Laufstreifens verringert sich der Aufwand, indem das Profil komplett auf der Baumaschine gespult wird. Vorteilhaft ist hierbei, dass gleichzeitig ein signifikanter Rundlaufvorteil durch die Eliminierung des Laufstreifensplices erreichbar ist. Ferner erfolgt das Aufspulen auf den konturierten Reifen im Schulterbereich deutlich konturgerechter. Insgesamt zeigt ein Fahrzeugreifen, welcher durch das erfindungsgemäße Verfahren hergestellt wird, deutlich verbesserte Eigenschaften hinsichtlich der Qualität sowie des Rundlaufs.

Der Reifenbau erfolgt vorliegend in mindestens zwei Schritten. Im ersten Schritt wird eine Karkasse geformt, die mindestens aus einer inneren Schicht, aus mindestens zwei Kernen mit Apex-Profilen und aus mindestens einer Textillage aufgebaut ist. Ferner verbunden wird diese mit mindestens zwei Seitenwänden sowie beispielsweise aus jeweils mindestens einem Gummistreifen und/oder Textilstreifen und/oder Stahlstreifen. Dabei werden in einem Schritt des Karkassbaus die Textillagen an der Auflegeeinheit um den Kern geschlagen und die Karkasse entsprechend der Auflegeeinheit geformt. Zeitgleich oder zeitversetzt erfolgt der Aufbau des Laufstreifenpakets, welches mindestens eine Gürtellage, eine Spulbandage und einen Laufstreifen umfasst. In einem zweiten nachfolgenden Schritt werden die Karkasse mit den Seitenwänden und das Laufstreifenpaket zusammengeführt indem die Karkasse auf eine Auflegeeinheit, insbesondere eine Bombiertrommel, aufgebracht und in das Laufstreifenpaket expandiert wird.

In einer bevorzugten Ausführungsform der Erfindung wird der Schritt des spiralförmigen Spulens begleitet von einem Anrollprozess, der den spiralförmig applizierenden Streifen der Innenschicht oder der Seitenwand oder des Laufstreifens unmittelbar nach der Applikation den jeweiligen Einzelstreifen anrollt. Vorteilhafterweise ist die Haftung der einzelnen Komponenten durch den Anrollprozess deutlich besser.

Das spiralförmige Spulen von definierten Streifen erfolgt mittels Strip-Winding. Ein solches Verfahren ist im Stand der Technik bekannt. Wesentlich ist, dass das spiralförmige Aufspulen mit einem Endlosstreifen direkt auf der Karkasstrommel und/oder der Bombiertrommel und/oder der kombinierten Karkass- und Bombiertrommel erfolgt, der spiralförmig um die Auflegeeinheit gespult wird, während alle anderen Bauteile des Reifens in einem konventionellen Verfahren appliziert werden. Im Sinne der Erfindung kann unter Spulen auch das Auflegen eines Streifens auf eine Auflegeeinheit verstanden werden. Dies kann manuell, teilweise oder vollautomatisch erfolgen. Erfindungsgemäß ist eine Lage eine einfach um die Auflegeeinheit umwickelte Lage, wobei eine Lage bevorzugt einen Kautschuk oder eine Kautschukmischung umfasst.

In einer bevorzugten Ausführungsform der Erfindung weisen die Streifen eine Breite von mindestens 5 mm auf. Vorteilhaft ist, dass solche Streifen in einem Standardprozess hergestellt werden können, so dass die Komplexität des Verfahrens deutlich vereinfacht wird. Üblicherweise weisen solche Streifen eine Höhe von 0,5 mm auf. Besonders bevorzugt weisen die Streifen eine breite im Bereich 10 mm bis 40 mm auf.

Bevorzugt umfassen die Streifen mindestens einen Kautschuk oder eine Kautschukmischung. Denkbar ist, dass die Streifen nur aus einer Kautschukmischung bestehen.

Weiterhin bevorzugt werden die Karkasse und/oder das Laufstreifenpaket mit einer Transfereinheit gefördert und anschließend zu einem Reifenrohling zusammengeführt, wobei die Förderung automatisch oder manuell erfolgt. Vorteilhafterweise erfolgt der Prozess des Transfers durch eine solche Transfereinheit, um die einzelnen Komponenten einfach zum nächsten Abschnitt des Reifenaufbaus zu fördern. Üblicherweise erfolgt die Förderung automatisch oder halbautomatisch, wobei ebenfalls denkbar ist, dass zumindest eine Transfereinheit manuell von einem Facharbeiter bewegt wird.

Bevorzugt wird die mindestens eine Auflegeeinheit von zwei Seiten bespult, wobei das Spulen besonders bevorzugt von jeder Seite zeitgleich oder zeitversetzt erfolgt. Denkbar ist, dass dazu zwei Aufspuleinheiten im Wesentlichen gegenüber angeordnet sind, wobei die Auflegeeinheit zwischen den Aufspuleinheiten angeordnet ist. Das Bespulen von zwei Seiten hat den Vorteil, dass unterschiedliche Abschnitte mit unterschiedlichen Streifen unterschiedlicher Breite gleichzeitig bespult werden können. Beispielsweise kann der mittlere Bereich der Auflegeeinheit mit einem schmalen Streifen und der äußere Schulterbereich mit einem breiteren Streifen spiralförmig bespult werden. Denkbar ist ebenfalls, dass lediglich ein Teil einer Komponente spiralförmig aufgespult wird.

Ferner bevorzugt wird beim Aufbau des Laufstreifens ein zusätzlicher Streifen auf die Auflegeeinheit gespult. Zwischen verschiedenen Spulprozessen kann somit ein zusätzlicher Streifen, beispielsweise mittig, im Laufstreifen appliziert werden. Vorteilhafterweise hat sich gezeigt, dass ein zusätzlicher Streifen zu einer verbesserten Stabilität und Qualität des Fahrzeugreifens führt. Ein solcher zusätzlicher Streifen weist üblicherweise eine Breite im Bereich von 5 mm bis 70 mm auf.

Bevorzugt wird bei der Herstellung des Laufstreifenpakets mindestens eine Komponente des Laufstreifens zuerst als eine Lage auf die Auflegeeinheit gelegt und dann die gleiche oder eine weitere Komponente zumindest teilweise spiralförmig in Streifen auf die mindestens eine Lage gespult. Vorteilhafterweise zeigt der Fahrzeugreifen mit einem solchen Laufstreifen somit deutlich verbesserte Eigenschaften hinsichtlich des Rundlaufs.

Weiterhin wird die Aufgabe der Erfindung durch eine Vorrichtung für die Herstellung eines Fahrzeugreifens gelöst, insbesondere mit Hilfe eines Verfahrens nach einem der vorherigen Ansprüche, wobei der Fahrzeugreifen mindestens eine Karkasse mit einer Innenschicht, mindestens zwei Seitenwände und mindestens ein Laufstreifenpaket aufweist, wobei die Vorrichtung mindestens eine Aufspuleinheit umfasst, welche dazu ausgebildet ist, mindestens einen Abschnitt oder eine Komponente der Innenschicht und/oder der Seitenwand und/oder des Laufstreifens zumindest teilweise spiralförmig in Streifen auf mindestens eine Auflegeeinheit zu spulen.

Vorteilhaft ist die erfindungsgemäße Vorrichtung, da zumindest die Innenschicht und/oder die Seitenwände und/oder der Laufstreifen spiralförmig in Streifen auf eine Auflegeeinheit gespult werden können. Üblicherweise werden breite Lagen für den Schichtaufbau eingesetzt, die durch die erfindungsgemäße Vorrichtung mit der Aufspuleinheit zum Aufspulen von spiralförmigen Streifen zumindest teilweise ersetzt werden können. Denkbar ist, dass sowohl die Innenschicht, die Seitenwände als auch der Laufstreifen mit einer solchen Aufspuleinheit herstellbar sind. Die Aufspuleinheit ist vorteilhafterweise dazu ausgebildet, einen Endlosstreifen auf eine Auflegeeinheit zu spulen.

In einer bevorzugten Ausführungsform ist die mindestens eine Aufspuleinheit dazu ausgebildet, die Streifen mit unterschiedlichen Breiten auf die mindestens eine Auflegeeinheit zu spulen, beispielsweise Streifen, die in der Mitte der Auflegeeinheit schmaler sind als im äußeren Schulterbereich. Die Aufspuleinheit kann auch zusätzlich dazu ausgebildet, zwei Streifen gleichzeitig spiralförmig auf eine Auflegeeinheit zu spulen. Dies ist vorteilhaft, wenn zwei Abschnitte auf der Auflegeeinheit mit unterschiedlichen Streifen bespult werden. Insbesondere dann, wenn die beiden Abschnitte mit Streifen unterschiedlicher Breite bespult werden. Vorteilhaftweise weisen Fahrzeugreifen mit einer Innenschicht und/oder einer Seitenwand und/oder einem Laufstreifen mit mindestens zwei Streifen unterschiedlicher Breite eine verbesserte Stabilität und einen verbesserten Rundlauf auf.

In einer weiteren bevorzugten Ausführungsform umfasst die mindestens eine Auflegeeinheit eine Trommel, beispielsweise eine Karkasstrommel und/oder eine Gürteltrommel und/oder eine Bombiertrommel. Die Trommel wird vorteilhafterweise jedem einzelnen Verfahrensschritt individuell angepasst. Für die Herstellung der Karkasse ist beispielsweise die Karkasstrommel, für die Herstellung des Laufstreifens oder Laufstreifenpakets ist beispielsweise die Gürteltrommel und für die Expansion der Karkasse in das Laufstreifenpaket ist beispielsweise die Bombiertrommel einsetzbar. Der Auflegekopf, beispielsweise mit mindestens einem Bombierkopf, findet Einsatz für das Aufspulen von weiteren Komponenten auf den Reifenrohling. Vortrag der Weise kann dessen Einsatz der jeweiligen geeigneten Trommel das Verfahren automatisch erfolgen.

Ferner bevorzugt umfasst die Vorrichtung mindestens drei Spuleinrichtungen mit jeweils mindestens einer Aufspuleinheit und mindestens einer Auflegeeinheit, wobei die erste Spuleinrichtung für den Aufbau der Innenschicht, die zweite Spuleinrichtung für den Aufbau der Seitenwände und die dritte Spuleinrichtung für den Aufbau des Laufstreifenpakets ausgebildet ist. In einer solchen bevorzugten Ausführungsform umfasst die Vorrichtung beispielsweise drei Maschinenbereiche, insbesondere eine Karkasseinrichtung, eine Laufstreifenpaketeinrichtung und eine Bombiereinrichtung, wobei jeder Maschinenbereich mindestens eine Spuleinrichtung zugeordnet wird. In dem ersten Maschinenbereich wird beispielsweise die Karkasse hergestellt, im zweiten Maschinenbereich wird beispielsweise das Laufstreifenpaket hergestellt und im dritten Maschinenbereich erfolgt beispielsweise die Expansion der Karkasse in das Laufstreifenpaket.

Bevorzugt sind mindestens zwei der mindestens drei Spuleinrichtungen mit mindestens einer Transfereinrichtung verbunden, wobei die Transfereinrichtung dazu ausgebildet ist, Bauteile, beispielsweise die Karkasse und/oder das Laufstreifenpaket, zu fördern. Vorteilhafterweise erfolgt die Förderung oder der Transfer zwischen den Spuleinrichtungen oder den einzelnen Maschinenbereichen zumindest teilweise automatisch.

In einer weiteren bevorzugten Ausführungsform ist mindestens eine Aufspuleinheit dazu ausgebildet, die Streifen auf eine expandierte Trommel, insbesondere eine Bombiertrommel, spiralförmig aufzuspulen. Vorteilhafterweise kann der Reifenrohling somit zusätzlich stabilisiert werden, wodurch der Fahrzeugreifen, der durch eine solche Vorrichtung hergestellt wurde, verbesserte Eigenschaften hinsichtlich der Qualität und des Rundlaufs aufzeigt.

Ferner bevorzugt sind die Spuleinrichtungen und/oder die Aufspuleinheit und/oder die Auflegeeinheit und/oder Untereinheiten zwischen den einzelnen Maschinenbereichen und/oder Einrichtungen und/oder Einheiten bewegbar, besonders bevorzugt rotierbar um die eigene Achse. Vorteilhafterweise ist somit ein automatisierter Aufbau möglich, wobei auch der Transfer der Bauteile automatisiert erfolgt.

In einer bevorzugten Ausführungsform umfasst die Vorrichtung mindestens drei Einrichtungen zur Herstellung eines Fahrzeugreifenbauteils, wobei
die erste Einrichtung dazu eingerichtet ist, die Karkasse herzustellen, umfassend mindestens eine Aufspuleinheit, welche dazu ausgebildet ist, mindestens eine Komponente der Innenschicht und/oder der Seitenwand zumindest teilweise spiralförmig in Streifen auf mindestens eine Karkasstrommel zu spulen, wobei der äußere Bereich der Innenschicht und/oder Seitenwand eine breite Lage und der innere Bereich spiralförmig aufgespulte Streifen umfasst;
die zweite Einrichtung dazu eingerichtet ist, das Laufstreifenpaket herzustellen, umfassend mindestens eine Aufspuleinheit, welche dazu ausgebildet ist, mindestens eine Komponente des Laufstreifens zumindest teilweise spiralförmig in Streifen auf mindestens eine Gürteltrommel zu spulen, wobei die unterste Lage des Laufstreifens eine breite Lage und die weiteren Lagen spiralförmig aufgespulte Streifen umfasst und
die dritte Einrichtung dazu eingerichtet ist, die hergestellte Karkasse und den Seitenwänden mit dem Laufstreifenpaket zu verbinden, umfassend mindestens eine Aufspuleinheit, welches dazu ausgebildet ist, mindestens eine Komponente zumindest teilweise spiralförmig in Streifen im Schulterbereich und/oder im Seitenwandbereich des ausgeformten Rohlings zu spulen.

Weiterhin betrifft die Erfindung einer beschriebenen Vorrichtung für den Reifenaufbau zur Herstellung eines Fahrzeugreifens.

Ferner wird die Aufgabe der Erfindung durch einen Fahrzeugreifen gelöst, welcher durch das beschriebene Verfahren hergestellt wird, wobei der Fahrzeugreifen mindestens eine Karkasse mit mindestens einer Innenschicht und mindestens zwei Seitenwänden und einen Laufstreifen aufweist,
wobei zumindest ein Abschnitt der Innenschicht und/oder der Seitenwände zumindest teilweise spiralförmig in Streifen angeordnet ist, wobei die Innenschicht und/oder die Seitenwände im äußeren Schulterbereich mindestens eine einfach umwickelte Lage aufweisen
   und/oder
mindestens ein Abschnitt oder eine Komponente des Laufstreifens zumindest teilweise spiralförmig in Streifen angeordnet ist
   und/oder
der Fahrzeugreifen mindestens eine Komponente im Schulterbereich und/oder im Seitenwandbereich aufweist, welche zumindest teilweise spiralförmig in Streifen angeordnet ist.

Der erfindungsgemäße Fahrzeugreifen zeigt deutlich verbesserte Eigenschaften gegenüber solchen im Stand der Technik auf, insbesondere in Bezug auf den Rundlauf. Vorteilhaft ist, dass der Fahrzeugreifen in bestimmten Abschnitten individuell in der Dicke und Stärke einzelner Komponenten und Schichten an bestimmte Anforderungen angepasst ist.

Weitere Ausführungen und Vorteile, die sich auf das Verfahren und die Vorrichtung beziehen, gelten ebenfalls für den Fahrzeugreifen.

Weitere Vorteile und Merkmale des erfindungsgemäßen Verfahrens, der Vorrichtung sowie des Fahrzeugreifens ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar, soweit diese technisch möglich sind. Dies gilt auch für die einzelnen Merkmale der nachfolgend diskutierten Ausführungsbeispiele, soweit diese nicht für den Fachmann als zwingend zueinander gehörig erkennbar sind.

### Figurenbeschreibung

Weitere Einzelheiten und Vorteile der vorliegenden Erfindung ergeben sich aus der nachfolgenden Beschreibung der Ausführungsführungsbeispiele in Verbindung mit den Zeichnungen. In dieser zeigen
- Figur 1: eine Ausführungsform einer erfindungsgemäßen Vorrichtung, mit der das erfindungsgemäße Verfahren durchführbar ist,
- Figur 2: zwei Ausführungsbeispiele einer Vorrichtung mit einer Karkasseinrichtungt zur Herstellung einer Karkasse und/oder Seitenwand,
- Figur 3: drei Ausführungsbeispiele einer Vorrichtung mit einer Laufstreifenpaketeinrichtung zur Herstellung eines Laufstreifenpakets und
- Figur 4: zwei Ausführungsbeispiele einer Vorrichtung mit einer Bombiereinrichtung zur Herstellung eines Reifenrohlings.

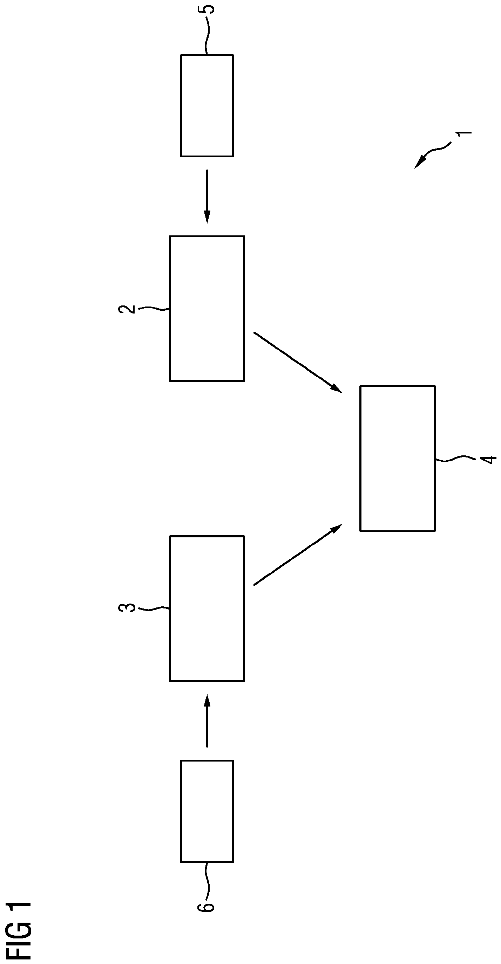

Figur 1 zeigt ein allgemeines Schema einer erfindungsgemäßen Vorrichtung 1 in einer möglichen Ausführungsform, mit der das erfindungsgemäße Verfahren durchführbar ist. Die Vorrichtung 1 umfasst eine Karkasseinrichtung 2, eine Laufstreifenpaketeinrichtung 3 sowie eine Bombiereirichtung 4. Die Karkasseinrichtung 2 umfasst mindestens eine Karkasstrommel, auf der die Karkasse aufgebaut wird. Jede Karkasstrommel weist mindestens einen ersten Spulbereich mit einer erfindungsgemäßen Aufspuleinheit auf, indem eine Innenschicht oder eine Seitenwand aufgebaut wird. Die Karkasseinrichtung 2 wird über eine erste Zubringereinheit 5 mit notwendigen Bauteilen, beispielsweise mit Karkasslagen, Karakssstreifen, Rimstrips/Seitenwände und/oder mit einer Innenschicht, gefüttert. Die Laufstreifenpaketeinrichtung 3 umfasst mindestens eine Gürteltrommel, auf der das Laufstreifenpaket inklusive des Gürtels aufgebaut wird, und mindestens einen dafür vorgesehenen zweiten Spulbereich mit einer erfindungsgemäßen Aufspuleinheit. Über eine zweite Zubringereinheit 6 wird die Laufstreifenpaketeinrichtung 3 mit Bauteilen, beispielsweise mit Gürtellagen und/oder Spulbandagen, versorgt. Sowohl die aufgebaute Karkasse als auch das Laufstreifenpaket werden anschließend in die Bombiereirichtung 4 gefördert und in dieser zusammengeführt. Die Bombiereirichtung 4 umfasst dafür mindestens eine Bombierrolle mit mindestens einem Bombierkopf und einen dritten Spulbereich mit einer erfindungsgemäßen Aufspuleinheit.

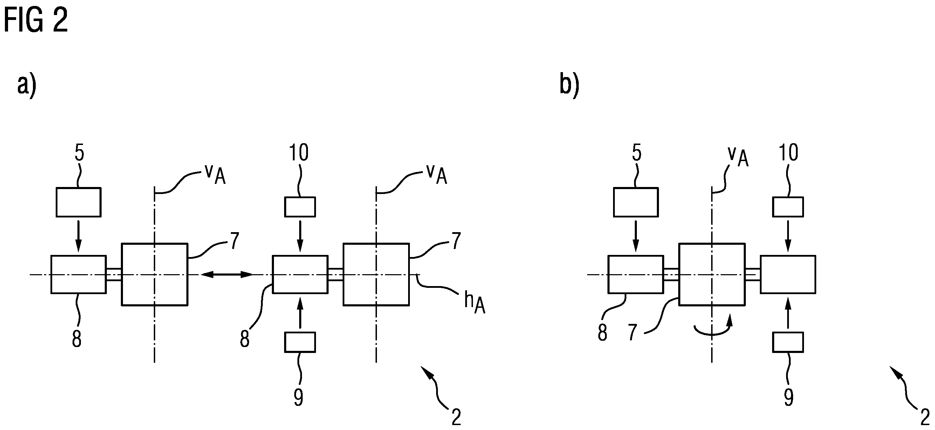

Figur 2a zeigt ein mögliches Ausführungsbeispiel einer Karkasseinrichtung 2 zur Herstellung einer Karkasse und/oder Seitenwand, umfassend eine erste bewegbare Karkassuntereinheit 7 mit einer Karkasstrommel 8, wobei die Karkasseinrichtung 2 im Wesentlichen entlang der horizontalen Achse hA bewegbar ist. Die Karkasseinrichtung 2 kann somit zuerst von der Zubringereinheit 5 mit einer Komponente bespeist werden und nach der horizontalen Bewegung von zwei Aufspuleinheiten 9, 10 bespult werden. In einer anderen Ausführungsform 2b der Karkasseinrichtung 2 umfasst diese eine Karkassuntereinheit 7 mit einer Karkasstrommel 8, wobei die Karkassuntereinheit 7 in der vertikalen Achse vA rotierbar ist und somit von einer ersten Position in eine zweite Position gebracht werden kann. Somit kann die Karkasstrommel 8 in einer ersten Position von der Zubringereinheit 5 bespeist werden und nach der Rotation in der zweiten Position von den zwei Aufspuleinheiten 9, 10 bespult werden.

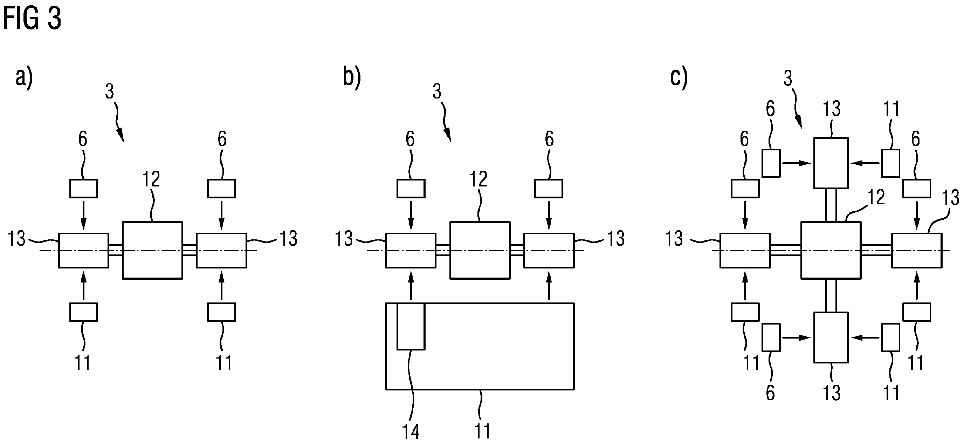

Figur 3 zeigt drei Ausführungsbeispiele einer Vorrichtung 1 mit einer Laufstreifenpaketeinrichtung 3 zur Herstellung eines Laufstreifenpakets, umfassend eine Laufstreifenuntereinheit 12. Die Laufstreifenuntereinheit 12 weist in einer Ausführungsform 3a zwei Gürteltrommeln 13 auf, die gegenüberliegend auf jeweils einer Seite angeordnet sind. Jede Gürteltrommel 13 wird über jeweils eine Zubringereinheit 6 mit einer Komponente bespeist, wobei das Aufspulen durch die jeweilige Aufspuleinheit 11 erfolgt. In einer anderen Ausführungsform 3b weist die Laufstreifenuntereinheit 12 ebenfalls zwei Gürteltrommeln 13 auf. Zusätzlich weist diese eine Streifenzubringereinheit 14 auf, durch die ein zusätzlicher Streifen auf die Gürteltrommel 13 aufgebracht wird, beispielsweise auf den Laufstreifen. In einer weiteren Ausführungsform 3c weist die Laufstreifenuntereinheit 12 vier Gürteltrommeln 13 auf, die insbesondere im Wesentlichen in einem rechten Winkel zueinander angeordnet sind. Auf den Gürteltrommeln 13 erfolgt der Aufbau des jeweiligen Laufstreifenpakets jeweils in mindestens einem Spulbereich mit jeweils mindestens einer Aufspuleinheit 11. Die Laufstreifenpaketeinrichtung 3 weist außerdem eine Zubringereinheit 6 auf, durch die beispielsweise Gürtellagen oder Spulbandagen in den Prozess eingebracht werden können.

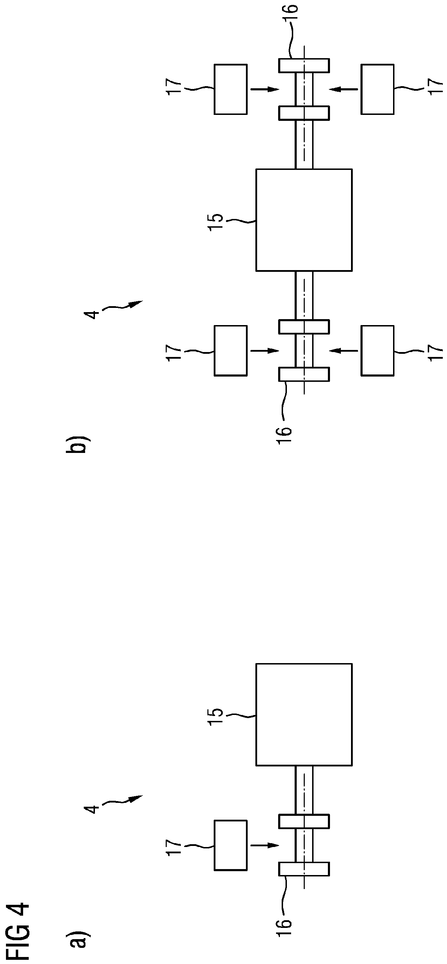

Figur 4 zeigt zwei Ausführungsbeispiele einer Vorrichtung 1 mit einer Bombiereinrichtung 4 zur Herstellung eines Reifenrohlings. Mit der Bombiereinrichtung 4 erfolgt das Expandieren der Karkasse mit den Seitenwänden in das Laufstreifenpaket zu einem Reifenrohling. Die Bombiereinrichtung 4 umfasst in einer ersten Ausführungseinheit 4a eine Bombieruntereinheit 15 mit einem Bombierkopf 16, wobei der Reifenrohling über eine Aufspuleinheit 17 im Schulterbereich und/oder im Bereich der Seitwände zusätzlich bespult wird. In einer zweiten Ausführungsform 4b umfasst die Bombiereinrichtung 4 eine Bombieruntereinheit 15 mit zwei Bombierköpfen 16, die gegenüberliegend angeordnet sind. Dadurch ist ein paralleles Bespulen möglich.

### Bezugszeichenliste:

- 1: Vorrichtung
- 2: Karkasseinrichtung
- 3: Laufstreifenpaketeinrichtung
- 4: Bombiereinrichtung
- 5: erste Zubringereinheit
- 6: zweite Zubringereinheit
- 7: Karkassuntereinheit
- 8: Karkasstrommel
- 9: erste Aufspuleinheit
- 10: zweite Aufspuleinheit
- 11: dritte Aufspuleinheit
- 12: Laufstreifenuntereinheit
- 13: Gürteltrommel
- 14: Streifenzubringereinheit
- 15: Bombieruntereinheit
- 16: Bombierkopf
- 17: vierte Aufspuleinheit

## Patentansprüche

1. Verfahren zur Herstellung eines Fahrzeugreifens, umfassend die Herstellung einer Karkasse mit mindestens zwei Seitenwänden, wobei die Karkasse mindestens eine Innenschicht aufweist, und die Herstellung eines Laufstreifenpakets,
**dadurch gekennzeichnet, dass**
- für die Herstellung der Karkasse mit den mindestens zwei Seitenwänden zumindest ein Abschnitt der Innenschicht und/oder der Seitenwände zumindest teilweise spiralförmig in Streifen auf mindestens eine Auflegeeinheit (8, 13, 16) aufgespult wird, wobei die Innenschicht und/oder die Seitenwände im äußeren Schulterbereich einen Abschnitt mit mindestens einer einfach umwickelten Lage aufweisen
und/oder
- für die Herstellung des Laufstreifenpakets mindestens ein Abschnitt oder eine Komponente des Laufstreifens zumindest teilweise spiralförmig in Streifen auf mindestens eine Auflegeeinheit (8, 13, 16) gespult wird
und/oder
- die Karkasse mit den Seitenwänden mindestens mit dem Laufstreifen zu einem Reifenrohling zusammengeführt und ausgeformt wird und der ausgeformte Reifenrohling mit mindestens einer Komponente im Schulterbereich und/oder im Seitenwandbereich zumindest teilweise spiralförmig in Streifen bespult wird.

2. Verfahren nach Anspruch 1, **dadurch gekennzeichnet, dass** die Streifen eine Breite von mindestens 5 mm aufweisen, bevorzugt im Bereich von 10 mm bis 40 mm.

3. Verfahren nach Anspruch 1 oder 2, **dadurch gekennzeichnet, dass** die Karkasse und/oder das Laufstreifenpaket mit einer Transfereinheit gefördert und anschließend zu einem Reifenrohling zusammengeführt werden, wobei die Förderung automatisch oder manuell erfolgt.

4. Verfahren nach einem der vorherigen Ansprüche 1 bis 3, **dadurch gekennzeichnet, dass** mindestens eine Auflegeeinheit (8, 13, 16) von zwei Seiten bespult wird, wobei das Spulen insbesondere von jeder Seite zeitgleich oder zeitversetzt erfolgt.

5. Verfahren nach einem der vorherigen Ansprüche 1 bis 4, **dadurch gekennzeichnet, dass** beim Aufbau des Laufstreifens ein zusätzlicher Streifen, insbesondere mit einer Breite von 5 mm bis 70 mm, auf die Auflegeeinheit (8, 13, 16) gespult wird.

6. Vorrichtung (1) für die Herstellung eines Fahrzeugreifens, insbesondere unter Verwendung eines Verfahrens nach einem der vorherigen Ansprüche, wobei der Fahrzeugreifen mindestens eine Karkasse mit einer Innenschicht, mindestens zwei Seitenwände und mindestens ein Laufstreifenpaket aufweist,
**dadurch gekennzeichnet, dass**
die Vorrichtung mindestens eine Aufspuleinheit (9, 10, 11, 17) umfasst, welche dazu ausgebildet ist, mindestens einen Abschnitt oder eine Komponente der Innenschicht und/oder der Seitenwand und/oder des Laufstreifens zumindest teilweise spiralförmig in Streifen auf mindestens eine Auflegeeinheit (8, 13, 16) zu spulen.

7. Vorrichtung (1) nach Anspruch 6, **dadurch gekennzeichnet, dass** die mindestens eine Aufspuleinheit (9, 10, 11, 17) dazu ausgebildet ist, die Streifen mit unterschiedlichen Breiten auf die mindestens eine Auflegeeinheit (8, 13, 16) zu spulen, insbesondere Streifen, die in der Mitte der Auflegeeinheit (8, 13, 16) schmaler sind als im äußeren Schulterbereich.

8. Vorrichtung (1) nach Anspruch 6 oder 7, **dadurch gekennzeichnet, dass** die mindestens eine Auflegeeinheit (8, 13, 16) eine Trommel, insbesondere eine Karkasstrommel (8) und/oder eine Gürteltrommel (13) und/oder eine Bombiertrommel (16), umfasst.

9. Vorrichtung (1) nach einem der Ansprüche 6 bis 8, **dadurch gekennzeichnet, dass** die Vorrichtung mindestens drei Spuleinrichtungen (2, 3, 4) mit jeweils mindestens einer Aufspuleinheit (9, 10, 11, 17) und mindestens einer Auflegeeinheit (8, 13, 16) umfasst, wobei die erste Spuleinrichtung für den Aufbau der Innenschicht, die zweite Spuleinrichtung für den Aufbau der Seitenwände und die dritte Spuleinrichtung für den Aufbau des Laufstreifenpakets eingerichtet ist.

10. Vorrichtung (1) nach einem der Ansprüche 6 bis 9, **dadurch gekennzeichnet, dass** mindestens eine Spuleinrichtung (2, 3, 4) im Wesentlichen horizontal verschiebbar und/oder um die vertikale Achse drehbar ist.

11. Vorrichtung (1) nach einem der Ansprüche 6 bis 10, **dadurch gekennzeichnet, dass** mindestens eine Aufspuleinheit dazu ausgebildet ist, die Streifen auf eine expandierte Trommel, insbesondere eine Bombiertrommel (16), spiralförmig aufzuspulen.

12. Verwendung einer Vorrichtung nach einem der Ansprüche 6 bis 11 für den Reifenaufbau zur Herstellung eines Fahrzeugreifens.

13. Fahrzeugreifen, hergestellt durch das Verfahren nach einem der Ansprüche 1 bis 5, **dadurch gekennzeichnet, dass** der Fahrzeugreifen mindestens eine Karkasse mit mindestens einer Innenschicht und mindestens zwei Seitenwänden und einen Laufstreifen aufweist,
wobei zumindest ein Abschnitt der Innenschicht und/oder der Seitenwände zumindest teilweise spiralförmig in Streifen angeordnet sind, wobei die Innenschicht und/oder die Seitenwände im äußeren Schulterbereich einen Abschnitt mit mindestens einer einfach umwickelten Lage aufweisen
und/oder
mindestens ein Abschnitt oder eine Komponente des Laufstreifens zumindest teilweise spiralförmig in Streifen angeordnet ist
und/oder
der Fahrzeugreifen mindestens eine Komponente im Schulterbereich und/oder im Seitenwandbereich aufweist, welche zumindest teilweise spiralförmig in Streifen angeordnet ist.
